(19)

Europäisches Patentamt

European Patent Office

Office européen des brevets

(11) **EP 4 033 001 A1**

(12) **EUROPEAN PATENT APPLICATION**
published in accordance with Art. 153(4) EPC

(43) Date of publication:
**27.07.2022  Bulletin 2022/30**

(21) Application number: **20866478.9**

(22) Date of filing: **17.06.2020**

(51) International Patent Classification (IPC):
**C22C 38/38** (2006.01)    **C21D 9/46** (2006.01)
**C21D 8/02** (2006.01)

(52) Cooperative Patent Classification (CPC):
**C21D 8/02; C21D 9/46; C22C 38/38; Y02P 10/20**

(86) International application number:
**PCT/KR2020/007845**

(87) International publication number:
**WO 2021/054578 (25.03.2021 Gazette 2021/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.09.2019   KR 20190115873**

(71) Applicant: **POSCO**
**Pohang-si, Gyeongsangbuk-do 37859 (KR)**

(72) Inventors:
• **AHN, Yeon-Sang**
  **Gwangyang-si, Jeollanam-do 57807 (KR)**
• **RYU, Joo-Hyun**
  **Gwangyang-si, Jeollanam-do 57807 (KR)**
• **CHOI, Kang-Hyun**
  **Gwangyang-si, Jeollanam-do 57807 (KR)**

(74) Representative: **Zech, Stefan Markus**
**Meissner Bolte Patentanwälte**
**Rechtsanwälte Partnerschaft mbB**
**Postfach 86 06 24**
**81633 München (DE)**

(54) **STEEL SHEET HAVING EXCELLENT UNIFORM ELONGATION AND STRAIN HARDENING RATE, AND METHOD FOR PRODUCING SAME**

(57)    The present invention relates to a steel sheet which is suitably used for an automobile structural member, etc., and more specifically, to: a steel sheet having excellent uniform elongation and strain hardening rate, while having high strength; and a method for producing same.

FIG. 1

**Description**

[Technical Field]

The present disclosure relates to a steel sheet suitably used for an automobile structural member or the like, and more particularly, to a steel sheet having high strength and excellent uniform elongation and a strain hardening rate, and a method for producing the same.

[Background Art]

In the automobile industry, environmental and safety regulations are becoming stricter and carbon dioxide ($CO_2$) emission regulations are also becoming stricter. Therefore, fuel consumption regulations are being tightened.
Meanwhile, the Insurance Institute for Highway Safety (IIHS) in the USA has gradually strengthened crash safety regulations for protecting passengers, and has required strict crash performance such as 25% small-overlap since 2013.
The only solution that may solve these environmental and safety issues is to achieve lightening of automobiles . In order to achieve the lightening of automobiles, high strength of a steel material is required, and high formability is also required to apply the high-strength steel material.
In general, as a method for strengthening steel, solid solution strengthening, precipitation strengthening, strengthening by grain refinement, transformation strengthening, or the like is used.
Thereamong, the solid solution strengthening and the strengthening by grain refinement are limited in producing high-strength steel having a tensile strength of 490 MPa or more.
Precipitation-strengthened high-strength steel is a technique to strengthen a steel sheet by forming a precipitate through the addition of carbonitride forming elements such as Cu, Nb, Ti, and V or to secure strength by refinement of grains through suppression of grain growth by fine precipitates . This precipitation strengthening technique has the advantage that strength may be easily obtained with low production costs, but has the disadvantage that high-temperature annealing is required in order to secure ductility by formation of sufficient recrystallization because the recrystallization temperature is rapidly increased by the fine precipitates.
In addition, the precipitation-strengthened steel that is strengthened by precipitating carbonitride in a ferrite matrix is limited in obtaining high-strength steel of 600 MPa or more.
Meanwhile, as transformation-strengthened high-strength steel, various types of steel such as ferrite-martensite dual-phase (DP) steel in which a hard martensite phase is formed in a ferrite matrix, transformation induced plasticity (TRIP) steel using transformation induced plasticity of retained-austenite, and complex phase (CP) steel comprised of ferrite and a hard bainite or martensite structure have been developed.
Recently, as a steel sheet for an automobile, a steel sheet having higher strength has been required to improve fuel efficiency, durability, and the like, the use of a high-strength steel sheet having a tensile strength of 490 MPa or more has increased as a steel sheet for an automobile structure or a reinforcing material for safety against collisions and passenger protection.
However, as the strength of the material is gradually increased, defects such as cracks or wrinkles occur in a process of press-forming an automobile component, resulting in limitations in manufacturing complex components.
Among the transformation-strengthened high-strength steels, the DP steel is a material recently most widely used, and it is estimated that when a uniform elongation and a strain hardening rate in a strain section of 10% or more of the DP steel are increased, processing defects such as cracks or wrinkles occurring during the press-forming are prevented, and thus, the application of the high-strength steel to complex components may be expanded.
As a technique for improving workability of a high-tensile strength steel sheet, Patent Document 1 discloses a steel sheet formed of a composite structure mainly comprised of a martensite phase, and discloses a method for dispersing fine precipitated copper particles having a particle diameter of 1 to 100 nm inside a structure in order to improve workability of the steel sheet.
However, in order to precipitate fine Cu particles, a high Cu content of 2 to 5 wt% is required to be added, and in this case, red brittleness by Cu may occur, and production costs may rise excessively.
As another example, Patent Document 2 discloses a steel sheet that has a structure containing 2 to 10% by area of a pearlite phase with ferrite as a matrix, and has improved strength through precipitation strengthening and grain refinement by adding elements such as Ti, which are precipitation strengthening elements. In this case, although hole expandability of the steel sheet is preferable, there is a limit in increasing tensile strength, and a yield strength is high while ductility is low, which may cause cracks during press forming.
As still another example, Patent Document 3 discloses a method for producing a cold-rolled steel sheet that has both high strength and high ductility by utilizing a tempered martensite phase and has an excellent sheet shape after continuous annealing. However, in the case of this technique, a content of carbon in the steel is 0.2% or more, which is high, and thus, there are problems such as deterioration of weldability and the occurrence of a dent defect in a furnace due to a large amount of contained Si.

(Patent Document 1) Japanese Patent Laid-Open Publication No. 2005-264176

(Patent Document 2) Korean Patent Laid-open Publication No. 2015-0073844

(Patent Document 3) Japanese Patent Laid-open Publication No. 2010-090432

[Disclosure]

[Technical Problem]

An aspect of the present disclosure is to provide a steel sheet that is suitable for an automobile structural member and the like, has a tensile strength of 490 MPa as well as an excellent uniform elongation (UE) and strain hardening rate (Nu).

An object of the present disclosure is not limited to the above description. The object of the present disclosure will be understood from the general contents of the present specification, and those skilled in the art to which the present disclosure pertains will have no difficulties in understanding the additional objects of the present disclosure.

[Technical Solution]

According to an aspect of the present disclosure, a steel sheet having excellent uniform elongation and strain hardening rate contains, by wt%, 0.08 to 0.15% of carbon (C), 1.2% or less (excluding 0%) of silicon (Si), 1.4 to 2.4% of manganese (Mn), 1.0% or less of chromium (Cr), 0.1% or less (excluding 0%) of phosphorus (P), 0.01% or less (excluding 0%) of sulfur (S), 1.0% or less (excluding 0%) of aluminum (sol.Al), 0.01% or less (excluding 0%) of nitrogen (N), 0.05% or less (excluding 0%) of antimony (Sb), and a balance of Fe and unavoidable impurities, wherein the steel sheet satisfies the following Relational Expression 1, and

the steel sheet includes, as a microstructure, ferrite having an area fraction of 60% or more and a balance of bainite, martensite, and retained-austenite.

[Relational Expression 1]

$$(C + Si + Al)/(Mn + Cr + (10 \times Nb) + (10 \times Ti)) \geq 0.42$$

(In Relational Expression 1, each element indicates a weight content.)

According to another aspect of the present disclosure, a method for producing a steel sheet having excellent uniform elongation and strain hardening rate includes: preparing a steel slab satisfying the alloy composition and Relational Expression 1; heating the steel slab in a temperature range of 1,100 to 1,300°C; subjecting the heated steel slab to finish hot rolling at an Ar3 transformation point or higher to produce a hot-rolled steel sheet; coiling the hot-rolled steel sheet in a temperature range of 400 to 700°C; performing cooling to room temperature at a cooling rate of 0.1°C/s or less after the coiling; performing cold rolling at a cold reduction ratio of 40 to 70% after the cooling to produce a cold-rolled steel sheet; continuously annealing the cold-rolled steel sheet in a temperature range of Ac1 + 30°C to Ac3 - 20°C; performing stepwise cooling after the continuous annealing; and maintaining the steel sheet for 30 seconds or longer after the stepwise cooling,

wherein the stepwise cooling includes a first cooling performed to 630 to 670°C at a cooling rate of 10°C/s or less (excluding 0°C/s), and a second cooling performed to a temperature range satisfying the following Relational Expression 3 at a cooling rate of 5°C/s or more in a hydrogen cooling facility after the first cooling.

[Relational Expression 3]

$$560 - (440 \times C) - (14 \times (Si + Al)) - (26 \times Mn) - (11 \times Cr) - (0.97 \times RCS) > 0$$

(In Relational Expression 3, each element indicates a weight content, and RCS indicates a second cooling end temperature (°C).)

[Advantageous Effects]

As set forth above, according to the present disclosure, the steel sheet having high strength and improved workability by optimizing the alloy component system and production conditions of steel may be provided.

As described above, in the steel sheet having improved workability of the present disclosure, processing defects such as cracks or wrinkles occurring during press-forming may be prevented. Therefore, the steel sheet may be suitably applied to components for structures that require processing into a complicated shape.

[Description of Drawings]

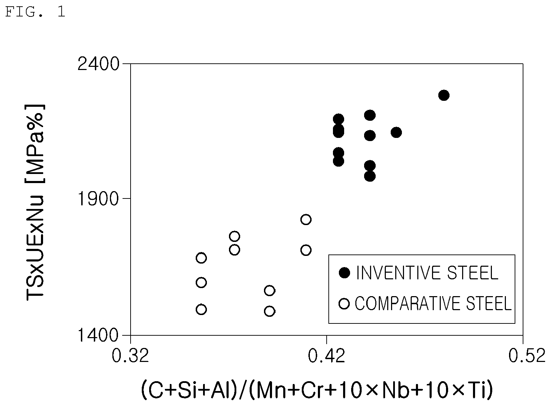

FIG. 1 illustrates a graph showing changes in relationship between a tensile strength, uniform elongation, and a strain hardening index (corresponding to Relational Expression 2) according to a composition ratio of C, Si, Al, Mn, Cr, Nb, and Ti in steel (corresponding to Relational Expression 1) in an exemplary embodiment in the present disclosure.

[Best Mode for Invention]

The present inventors of the present disclosure have intensively researched to develop a material having a level of workability that may be suitably used in components that require processing into a complicated shapes among materials for automobiles.

As a result, the present inventors have found that a high-strength steel sheet having a structure advantageous for securing desired physical properties may be provided by optimizing an alloy composition and production conditions, thereby completing the present disclosure.

In particular, in the present disclosure, it is found that a composite structure in which a soft phase and a hard phase are appropriately dispersed may be obtained and a fine martensite phase may be formed, by controlling contents of specific elements in alloy components and optimizing annealing operation conditions of a steel sheet produced through a series of processes. Due to this, uniform strain hardening in the entire steel may be implemented not only in the initial stage of plastic strain but also to the later stage of plastic strain of 10% or more. Therefore, a strain hardening rate in the entire strain rate section may be increased. In addition, the present disclosure has technical significance in that a uniform elongation is significantly increased by alleviating stress and strain so as not to be concentrated on any one part of the steel.

Hereinafter, the present disclosure will be described in detail.

A steel sheet having excellent uniform elongation and a strain hardening rate according to an aspect of the present disclosure may contain, by wt%, 0.08 to 0.15% of carbon (C), 1.2% or less (excluding 0%) of silicon (Si), 1.4 to 2.4% of manganese (Mn), 1.0% or less of chromium (Cr), 0.1% or less (excluding 0%) of phosphorus (P), 0.01% or less (excluding 0%) of sulfur (S), 1.0% or less (excluding 0%) of aluminum (sol.Al), 0.01% or less (excluding 0%) of nitrogen (N), and 0.05% or less (excluding 0%) of antimony (Sb).

Hereinafter, the reason for limiting the alloy composition of the steel sheet provided in the present disclosure as described above will be described in detail.

Meanwhile, in the present disclosure, a content of each element is based on weight, and a ratio of a structure is based on area, unless specifically stated otherwise.

Carbon (C): 0.08 to 0.15%

Carbon (C) is an important element added to strengthen a transformation structure of steel. C achieves high strength of the steel and promotes formation of martensite in composite structure steel. As a content of C is increased, the amount of the martensite in the steel is increased.

However, when the content of C exceeds 0.15%, strength is increased due to the increase in the amount of the martensite in the steel, but a difference in strength with ferrite having a relatively low carbon concentration is increased. Due to such a difference in strength, fracturing occurs easily at an interface between phases when stress is applied, reducing ductility and a strain hardening rate. In addition, weldability is deteriorated, which causes welding defects during processing of client components . On the other hand, when the content of C is less than 0.08%, it is difficult to secure a desired degree of strength.

Therefore, in the present disclosure, it is preferable that the content of C be controlled to be 0.08 to 0.15%. More preferably, C may be contained in an amount of 0.10% or more, and still more preferably 0.11% or more.

Silicon (Si): 1.2% or less (excluding 0%)

Silicon (Si) is a ferrite stabilizing element, and is an element that promotes transformation of ferrite and promotes formation of martensite by promoting concentration of C into untransformed austenite. In addition, silicon has an excellent solid solution strengthening effect to increase strength of ferrite and is thus effective in reducing a difference in hardness between phases, and is an element useful for securing strength without reducing the ductility of the steel sheet.

When a content of Si exceeds 1.2%, surface scale defects may be caused, resulting in deteriorating plating surface quality and impairing chemical treatment.

Therefore, in the present disclosure, it is preferable that the content of Si be controlled to 1.2% or less, and 0% is excluded. More preferably, Si may be contained in an amount of 0.2 to 1.0%.

Manganese (Mn): 1.4 to 2.4%

Manganese (Mn) has the effect of refining particles without reducing ductility and precipitating sulfur (S) in the steel as MnS to prevent hot brittleness by formation of FeS. In addition, Mn is an element that strengthens the steel, and also serves to lower a critical cooling rate at which a martensite phase is obtained in composite structure steel. Therefore, Mn is useful for more easily forming martensite.

When a content of Mn is less than 1.4%, the above-described effect may not be obtained, and it is difficult to secure a desired level of strength. On the other hand, when the content of Mn exceeds 2.4%, weldability, hot rolling properties, and the like are likely to occur, the material is unstable due to formation of excessive martensite, and an Mn-Band (an Mn oxide band) is formed in the structure, which causes an increase in risk of the occurrence of processing cracks and sheet fractures. In addition, Mn oxide is eluted on a surface during annealing, which greatly inhibits plating properties.

Therefore, in the present disclosure, it is preferable that the content of Mn be controlled to 1.4 to 2.4%. More preferably, Mn may be contained in an amount of 1.5 to 2.3%.

Chromium (Cr): 1.0% or less

Chromium (Cr) is an element added to improve hardenability of steel and ensure high strength. Cr is effective for forming martensite, and may be advantageous in producing composite structure steel having high ductility by significantly minimizing a decrease in ductility compared to an increase in strength. In particular, Cr forms Cr-based carbides such as $Cr_{23}C_6$ in a hot rolling process. Some of the carbides are dissolved and some of the carbides remain undissolved in the annealing process. Accordingly, the amount of solid solution C in the martensite after cooling may be controlled to an appropriate level or lower. Therefore, Cr has an advantageous effect in producing composite structure steel in which the generation of yield point elongation (YP-EI) is suppressed and a yield ratio is low.

In the present disclosure, the addition of Cr promotes improvement of hardenability to facilitate the formation of martensite, but when a content of Cr exceeds 1.0%, the effect thereof is saturated, and hot rolling strength is excessively increased, which causes deterioration of cold rolling properties. In addition, a fraction of the Cr-based carbide is increased and the Cr-based carbide is coarsened, and thus, a size of the martensite after annealing is increased, which causes a reduction in elongation.

Therefore, in the present disclosure, it is preferable that the content of Cr be controlled to 1.0% or less. Even when the content thereof is 0%, there is no difficulty in securing desired physical properties.

Phosphorus (P): 0.1% or less (excluding 0%)

Phosphorus (P) is a substitutional element having the greatest solid solution strengthening effect, and is an element that is advantageous in improving in-plane anisotropy and securing strength without significantly deteriorating formability. However, in a case in which P is excessively added, the possibility of brittle fracture is greatly increased, such that the possibility of sheet fracture of a slab during hot rolling is increased, and plating surface properties are deteriorated.

Therefore, in the present disclosure, it is preferable that the content of P be controlled to 0.1% or less, and 0% is excluded in consideration of an inevitably added level.

Sulfur (S): 0.01% or less (excluding 0%)

Sulfur (S) is an element inevitably added as an impurity element in steel, and it is preferable to manage a content of S to be as low as possible because it inhibits ductility and weldability. In particular, S has a problem of increasing the possibility of generating red brittleness. It is preferable to control the content thereof to 0.01% or less. However, 0% is excluded in consideration of an inevitably added level in a production process.

Aluminum (sol.Al): 1.0% or less (excluding 0%)

Aluminum (sol.Al) is an element added to refine a particle size of steel and deoxidize the steel. In addition, Al is a ferrite stabilizing element, is an effective component for improving hardenability of martensite by distributing carbon in ferrite into austenite, and is an element useful for improving ductility of a steel sheet by effectively suppressing precipitation of carbides in bainite when held in a bainite region.

When a content of Al exceeds 1.0%, it is advantageous for an increase in strength through a grain refinement effect, but surface defects in a plated steel sheet are likely to occur due to excessive inclusions during a steelmaking continuous casting operation. In addition, production costs may rise.

Therefore, in the present disclosure, it is preferable that the content of Al be controlled to 1.0% or less, and 0% is excluded. More preferably, Al may be contained in an amount of 0.7% or less. In the present disclosure, aluminum refers to acid solid solution aluminum (Sol.Al).

Nitrogen (N): 0.01% or less (excluding 0%)

Nitrogen (N) is an effective element for stabilizing austenite, and when a content thereof exceeds 0.01%, a refining cost of steel rises sharply, and a risk of occurrence of cracks during continuous casting is greatly increased by formation of AlN precipitate.

Therefore, in the present disclosure, it is preferable that the content of N be controlled to 0.01% or less, and 0% is excluded in consideration of an inevitably added level.

Antimony (Sb): 0.05% or less (excluding 0%)

Antimony (Sb) is distributed in grain boundaries and serves to delay diffusion of oxidizing elements such as Mn, Si, and Al through the grain boundaries. Therefore, antimony suppresses a surface concentration of oxide, and has the effect of suppressing coarsening of the surface concentrate depending on a temperature rise and a hot rolling process change.

When a content of Sb exceeds 0.05%, the effect thereof is saturated, and also, production costs rise and workability is deteriorated.

Therefore, in the present disclosure, it is preferable that the content of Sb be controlled to 0.05% or less, and 0% is excluded.

The remaining component of the present disclosure is iron (Fe). However, unintended impurities may be inevitably mixed from raw materials or surrounding environments in a general production process. Therefore, it is difficult to exclude these impurities. Since these impurities may be recognized in the general production process by those skilled in the art, all the contents thereof are not particularly described in the present specification.

Meanwhile, the steel sheet of the present disclosure does not contain titanium (Ti) and niobium (Nb). In a case in which Ti and Nb are contained in the steel, the strength of ferrite is significantly increased. Therefore, when stress is applied from the outside, effective strain of the ferrite is limited, and as a result, the strain hardening rate and the uniform elongation may be significantly reduced.

Therefore, in the present disclosure, Ti and Nb are not contained. However, Ti and Nb may be added in a steel production process at an impurity level, and in this case, the physical properties of the present disclosure are not impaired. Specifically, when a content of each of Ti and Nb is 0.008% or less, it is an impurity level.

In the steel sheet having the alloy composition described above of the present disclosure, it is preferable that contents of C, Si, Al, Mn, Cr, Nb, and Ti in the steel satisfy the following Relational Expression 1. Here, the inside of the steel refers to a 1/4t point of the steel sheet in a thickness direction (t represents a thickness (mm) of the steel sheet).

[Relational Expression 1]

$$(C + Si + Al)/(Mn + Cr + (10 \times Nb) + (10 \times Ti)) \geq 0.42$$

(In Relational Expression 1, each element indicates a weight content.)

The main object of the present disclosure is to increase a uniform elongation and a strain hardening rate as well as high strength. To this end, it is required to form an advantageous structure for securing intended physical properties by optimizing an alloy composition and production conditions of steel.

As described above, the present inventors have found that in a case in which a soft phase and a hard phase as steel structures are uniformly distributed, the uniform elongation and the strain hardening rate may be increased.

Therefore, it is preferable that the contents of Ti and Nb, which are elements that may impair the uniform elongation of the steel, are lowered as much as possible, the contents of the elements (C, Si, and Al) advantageous in forming a fine martensite phase are increased, and a ratio of Mn and Cr, which are advantageous for improving hardenability is controlled. More specifically, a value of the component relational expression represented by Relational Expression 1 of 0.42 or more is secured, such that structure composition and physical properties intended in the present disclosure may be advantageously obtained.

When the value of Relational Expression 1 is less than 0.42, the hardenability of the steel is excessively increased to easily achieve the strength of the steel, but the uniform elongation and the strain hardening rate are reduced.

In order to increase the uniform elongation and the strain hardening rate together with the high strength desired in the present disclosure, in addition to the alloy composition described above, the microstructure of the steel sheet is required to satisfy the following.

Specifically, the steel sheet of the present disclosure may include, as a microstructure, ferrite having an area fraction of 60% or more and a balance of bainite, martensite, and retained-austenite.

When the fraction of the ferrite phase is less than 60%, the ductility of the steel may not be sufficiently secured.

The steel sheet of the present disclosure may contain a martensite phase in the balance structure in an area fraction of 5 to 20%. When the fraction of the martensite phase is less than 5%, a desired level of the strength may not be secured. On the other hand, when the fraction of the martensite phase exceeds 20%, the ductility of the steel is reduced, and thus, uniform elongation may not be increased.

In addition, it is preferable that the number of martensite grains having an average grain size of 3 $\mu$m or less and an aspect ratio (long diameter/short diameter) of less than 4 is 70% or more of the total number of all martensite grains.

That is, in the present disclosure, the fine martensite phases are mainly distributed in the steel, such that the effect of implementing uniform strain hardening during plastic strain may be obtained.

The steel sheet of the present disclosure contains a bainite phase in addition to the ferrite phase and the martensite phase described above, and 8% or more of the bainite phase is formed during a steel production process, such that the fine martensite structure described above and a predetermined fraction of a retained-austenite phase may be secured as a final structure.

The bainite phase contributes to the strength of the steel, and also influences the formation of the retained-austenite phase. In a case in which Si is added to the steel, when carbon is concentrated in austenite surrounding bainite by transformation of bainite, precipitation of carbides is delayed, such that thermal stability of austenite is improved. Therefore, the retained-austenite phase may be secured at room temperature.

The retained-austenite phase is advantageous in securing the ductility of the steel because it causes transformation-induced plasticity during forming. However, in a case in which a fraction of the retained-austenite phase is excessive, it tends to be vulnerable to liquid metal embrittlement (LME) during spot welding for automobile component assembly after plating. Therefore, in the present disclosure, it is preferable that the area fraction be controlled to less than 5% (excluding 0%).

In the preset disclosure, when a fraction of the bainite is 8% or more, C is concentrated in untransformed austenite, such that the retained-austenite phase contributing to the ductility of the steel may be partially secured, and the fine martensite phase is formed around the bainite. When the fraction of the bainite is less than 8%, the retained-austenite phase contributing to the ductility may not be secured due to a low content of C in untransformed austenite, and the uniform elongation and the strain hardening rate are significantly reduced due to formation of coarse martensite around the ferrite phase. More preferably, the bainite phase may be contained in an area fraction of 8 to 30%.

As described above, in the steel sheet of the present disclosure, a composite structure in which the fine martensite phase and a small amount of the retained-austenite phase are uniformly distributed around the ferrite phase and the bainite phase is formed, such that uniform strain hardening in the entire steel may be implemented not only in the initial stage of plastic strain but also to the later stage of plastic strain of 10% or more. Therefore, the effect of significantly increasing the uniform elongation and increasing the strain hardening rate in the entire strain rate section may be obtained.

In particular, in the steel sheet of the present disclosure, a relationship between a strain hardening index (Nu), a tensile strength (TS), and a uniform elongation (UE) measured in a strain section of 10 to a uniform elongation (%) may satisfy the following Relational Expression 2.

In addition, the steel sheet of the present disclosure may have a tensile strength of 490 MPa or more.

[Relational Expression 2]

$$(TS \times UE \times Nu) \geq 1,900$$

(where a unit is MPa%.)

The high-strength steel sheet of the present disclosure may include a zinc-based plating layer formed on at least one surface thereof.

In this case, the zinc-based plating layer is not particularly limited, and may be a zinc plating layer mainly containing zinc or a zinc alloy plating layer containing aluminum and/or magnesium in addition to zinc.

Hereinafter, according to another aspect of the present disclosure, a method for producing a steel sheet having excellent uniform elongation and strain hardening rate provided in the present disclosure will be described in detail.

Briefly, according to the present disclosure, a desired steel sheet may be produced through [steel slab reheating - hot rolling - coiling - cold rolling - continuous annealing - cooling], and then, a process of [hot-dip galvanizing - (final) cooling] may be further performed.

The conditions for each step will be described in detail below.

[Steel slab heating]

First, the steel slab satisfying the alloy composition and Relational Expression 1 described above may be prepared and then heated.

This process is performed to smoothly perform a subsequent hot rolling process and to obtain sufficient physical properties of a desired steel sheet. In the present disclosure, the process conditions of such a heating process are not particularly limited as long as they are common conditions. As an example, the heating process may be performed in a temperature range of 1,100 to 1,300°C.

[Hot rolling]

The steel slab heated as described above may be subjected to finish hot rolling at an Ar3 transformation point or higher, and in this case, it is preferable that an outlet temperature satisfies Ar3 to Ar3 + 50°C.

When the outlet temperature during the finish hot rolling is lower than Ar3, ferrite and austenite dual-phase region rolling is performed, which may cause material unevenness. On the other hand, when the temperature is higher than Ar3 + 50°C, the material unevenness may be caused by formation of an abnormal coarse grain due to high-temperature rolling, which causes coil distortion during subsequent cooling.

More specifically, the finish hot rollingmay be performed in a temperature range of 800 to 1,000°C.

[Coiling]

It is preferable that the hot-rolled steel sheet produced as described above be coiled.

The coiling is preferably performed in a temperature range of 400 to 700°C. When the coiling temperature is lower than 400°C, the strength of the hot-rolled steel sheet is excessively increased due to formation of excessive martensite or bainite, which may cause shape defects and the like due to a load during subsequent cold rolling. On the other hand, when the coiling temperature is higher than 700°C, a surface concentration and internal oxidation of elements such as Si, Mn, and B in the steel, which cause deterioration wettability of hot-dip zinc plating, may become severe.

[Cooling]

It is preferable that the coiled hot-rolled steel sheet is cooled to room temperature at a cooling rate of 0.1°C/s or less (excluding 0°C/s). More preferably, the cooling may be performed at a cooling rate of 0.05°C/s or less, and more preferably 0.015°C/s or less. Here, the cooling refers to an average cooling rate.

As described above, the coiled hot-rolled steel sheet is cooled at a predetermined rate, such that a hot-rolled steel sheet in which carbides serving as nucleation sites for austenite are finely dispersed may be obtained.

That is, the fine carbides may be uniformly dispersed in the steel during the hot rolling process, and the austenite phases may be finely dispersed and formed in the steel while the carbides are dissolved during subsequent annealing. Therefore, after completing the annealing, uniformly dispersed fine martensite phases may be obtained.

[Cold rolling]

The hot-rolled steel sheet coiled as described above may be cold rolled to produce a cold-rolled steel sheet.

In this case, it is preferable that the cold rolling is performed at a cold reduction ratio of 40 to 70%. When the cold reduction ratio is less than 40%, it is difficult to obtain a desired thickness and to correct the shape of the steel sheet. On the other hand, when the cold reduction ratio exceeds 70%, cracks are likely to occur at an edge portion of the steel sheet, and a cold rolling load is caused.

# EP 4 033 001 A1

[Continuous annealing]

It is preferable that the cold-rolled steel sheet produced as described above is subjected to continuous annealing. The continuous annealing treatment may be performed, for example, in a continuous galvanneling furnace.

The continuous annealing process is a process for forming ferrite and austenite phases together with recrystallization and for decomposing carbon.

It is preferable that the continuous annealing treatment be performed in a temperature range of Ac1 + 30°C to Ac3 - 20°C, and more preferably in a temperature range of 780 to 830°C.

When the temperature is lower than Ac3 - 20°C during the continuous annealing, sufficient recrystallization is not achieved, and it is difficult to sufficiently form austenite. Therefore, it is difficult to secure a desired fraction of each of the martensite phase and the bainite phase after annealing. On the other hand, when the temperature is higher than Ac1 + 30°C, productivity is reduced, and the austenite phase is excessively formed. Therefore, the fraction of each of the martensite phase and the bainite phase is significantly increased after cooling, such that yield strength is increased and ductility is reduced. As a result, it is difficult to secure a low yield ratio and high ductility. In addition, a surface concentration is increased due to elements such as Si, Mn, and B, which inhibit wettability of hot-dip zinc plating, and thus, the plating surface quality may be deteriorated.

[Stepwise cooling]

It is preferable that the cold-rolled steel sheet subjected to the continuous annealing as described above is subjected to stepwise cooling.

Specifically, it is preferable to perform the cooling to 630 to 670°C at an average cooling rate of 10°C/s or less (excluding 0°C/s) (this cooling is referred to as a first cooling) and then to perform the cooling to a temperature range satisfying the following Relational Expression 3 at an average cooling rate of 5°C/s or more (this cooling is referred to as a second cooling).

[Relational Expression 3]

$$560 - (440 \times C) - (14 \times (Si + Al)) - (26 \times Mn) - (11 \times Cr) - (0.97 \times RCS) > 0$$

(In Relational Expression 3, each element indicates a weight content, and RCS indicates a second cooling end temperature (°C)).

First cooling

When the end temperature of the first cooling is lower than 630°C, the diffusion activity of carbon is low due to a temperature that is too low, resulting in an increase in concentration of carbon in ferrite. Therefore, the yield ratio is increased, which causes an increase in occurrence of cracks during processing. On the other hand, when the end temperature is higher than 670°C, it is advantageous in terms of carbon diffusion, but is disadvantageous in that an excessively high cooling rate is required for subsequent cooling (second cooling). In addition, when the average cooling rate during the first cooling exceeds 10°C/s, the carbon diffusion is not sufficiently performed.

Meanwhile, a lower limit of the average cooling rate is not particularly limited, but may be 1°C/s or more in consideration of productivity.

Second cooling

It is preferable that second cooling is performed after completing the first cooling under the conditions described above. In this case, formation of a desired microstructure may be induced by controlling the cooling end temperature (RCS, quenching end temperature) with a relationship between C, Si, Al, Mn, and Cr in the steel.

The phase transformation temperature and the fraction of each phase of the steel may vary depending on the alloy composition and the annealing temperature. In the present disclosure, the fraction of each of the bainite, retained-austenite, and martensite phases of the final structure varies depending on the cooling end temperature during the second cooling.

When the value of Relational Expression 3 is lower than 0, a sufficient fraction of the bainite phase may not be secured, which causes a decrease in content of C in untransformed austenite. Therefore, the retained-austenite phase

9

contributing to ductility may not be secured. In addition, a coarse martensite phase is formed around the ferrite, and the uniform elongation and the strain hardening rate of the steel are significantly reduced.

On the other hand, if the value of Relational Expression 3 is greater than 0, as a final structure, a composite structure in which 8% or more of a bainite phase is secured, and fine martensite grains in which the number of martensite grains having an average grain size of 3 $\mu$m or less and an aspect ratio (long diameter/short diameter) of less than 4 occupies 70% or more of the total number of all martensite grains and the retained-austenite is uniformly dispersed in a small amount around the ferrite and bainite phases may be formed.

In the second cooling performed at a temperature satisfying Relational Expression 3, when the average cooling rate is less than 5°C/s, a desired level of the bainite phase may not be formed. An upper limit of the average cooling rate during the second cooling is not particularly limited, and may be appropriately selected by those skilled in the art in consideration of specifications of a cooling facility. For example, the second cooling may be performed at 100°C/s or less.

In addition, in the second cooling, a hydrogen cooling facility using hydrogen gas ($H_2$ gas) may be used. As described above, the cooling is performed using the hydrogen cooling facility, such that the surface oxidation which may occur during the second cooling may be suppressed.

Meanwhile, in the stepwise cooling performed as described above, the cooling rate during the second cooling may be faster than the cooling rate during the first cooling, and in the present disclosure, the bainite phase may be formed during a subsequent maintaining process after performing the second cooling under the conditions described above.

[Maintaining]

After completing the stepwise cooling as described above, it is preferable that the steel sheet be maintained in the cooled temperature range for 30 seconds or longer.

The maintaining process is performed after the second cooling described above, such that the bainite phase may be formed and carbon may be concentrated in an untransformed austenite phase adjacent to the formed bainite phase. This is intended to form a fine martensite phase in a region adjacent to bainite after completing all subsequent processes.

In this case, when the maintaining time is shorter than 30 seconds, the amount of C concentrated in the untransformed austenite phase is insufficient, and thus, a desired microstructure may not be secured. On the other hand, when the maintaining time is longer than 200 seconds during the maintaining process, the fraction of the bainite is excessive, and the martensite phase in the final structure may not be sufficiently secured.

[Hot-dip galvanizing]

It is preferable that a hot-dip zinc-based plated steel sheet is produced by dipping the steel sheet subjected to the stepwise cooling and maintaining processes as described above in a hot-dip zinc-based plating bath.

In this case, the hot-dip galvanizing may be performed under common conditions, and as an example, the hot-dip galvanizing may be performed in a temperature range of 430 to 490°C. In addition, the composition of the hot-dip zinc-based plating bath in the hot-dip galvanizing is not particularly limited, and the hot-dip zinc-based plating bath may be a pure zinc plating bath or a zinc-based alloy plating bath containing Si, Al, Mg, and the like.

[Final cooling]

After completing the hot-dip galvanizing, it is preferable that cooling is performed to Ms (martensite transformation initiation temperature) - 100°C or lower at a cooling rate of 3°C/s or more. In this process, a fine martensite (fresh martensite) phase may be formed in a region adjacent to the bainite phase of the steel sheet (here, the steel sheet corresponds to a base material at a bottom of a plating layer).

When the end temperature of the cooling is higher than Ms - 100°C, a fine martensite phase and an appropriate fraction of a retained-austenite phase may not be sufficiently secured, and when an average cooling rate is less than 3°C/s, a fraction of the martensite is decreased due to a cooling rate that is too slow. Therefore, a desired level of the strength may not be secured. An upper limit of the cooling rate during the cooling is not particularly limited, and may be 10°C/s or less.

There is no problem in securing a desired structure even when the cooling is performed to room temperature. Here, the room temperature may be about 10 to 35°C.

An alloyed hot-dip zinc-based plated steel sheet may be obtained by subjecting the hot-dip zinc-based plated steel sheet to alloying heat treatment before the final cooling, if necessary. In the present disclosure, the process conditions of the alloying heat treatment process are not particularly limited as long as they are common conditions. As an example, the alloying heat treatment process may be performed in a temperature range of 480 to 600°C.

Furthermore, a final cooled hot-dip zinc-based plated steel sheet or alloyed hot-dip zinc-based plated steel sheet is subjected to temper rolling, if necessary, such that a large amount of dislocation is formed in the ferrite located around the martensite to further improve bake hardenability.

At this time, a reduction ratio is preferably less than 1% (excluding 0%). When the reduction ratio is 1% or more, it is advantageous in terms of dislocation formation, but side effects such as occurrence of sheet fracture may be caused due to limitations in facility capability.

The steel sheet produced as described above of the present disclosure may include, as a microstructure, ferrite having an area fraction of 60% or more and a balance of bainite, martensite, and retained-austenite . In this case, the number of martensite grains having an average grain size of 3 μm or less and an aspect ratio (long diameter/short diameter) of less than 4 may be 70% or more of the total number of all martensite grains.

These fine martensite phase and the retained-austenite phase are uniformly distributed around the bainite and ferrite phases, such that the uniform elongation and the strain hardening rate are increased.

Hereinafter, the present disclosure will be described in more detail with reference to Examples. However, the following Examples are provided to illustrate and describe the present disclosure in detail, but are not intended to limit the scope of the present disclosure. This is because the scope of the present disclosure is determined by contents disclosed in the claims and contents reasonably inferred therefrom.

[Mode for Invention]

(Examples)

Steel slabs having the alloy compositions shown in Table 1 were produced, the steel slabs were heated in a temperature range of 1,100 to 1,300°C, the heated steel slabs were subjected to finish hot rolling at the temperature shown in Table 2 to produce hot-rolled steel sheets, and then each of the hot-rolled steel sheets was charged and coiled in a coiling furnace and then subjected to furnace cooling to room temperature at a rate of 0.002°C/s. The coiling temperature of each of the hot-rolled steel sheets at this time is shown in Table 2.

Thereafter, each of the hot-rolled steel sheets was pickled and then cold rolled at a cold reduction ratio of 40 to 70% to produce a cold-rolled steel sheet, the cold-rolled steel sheet was subjected to continuous annealing under the conditions shown in Table 2, and then the steel sheet was subjected to stepwise cooling (first and second) and then was maintained at the second cooling end temperature for 30 seconds or longer. The maintaining was performed within 200 seconds.

Thereafter, the steel sheet was subjected to zinc plating in a hot-dip zinc plating bath at 430 to 490°C, and the zinc-plated steel sheet was subjected to final cooling and then was subjected to temper rolling to less than 1%, thereby producing a hot-dip zinc-based plated steel sheet.

The microstructure of each of the steel sheets produced as described above was observed, and mechanical properties were evaluated. The results are shown in Table 3.

At this time, the tensile test for each of the test pieces was performed in the L direction using DIN standards, and the value of the strain hardening rate in a section of a strain rate of 10 to UE% was measured as the strain hardening rate (n).

In addition, for the microstructure fraction, the matrix structure was analyzed at the plate thickness of 1/4t of the steel sheet. Specifically, after Nital corrosion, the fraction of each of ferrite (F), bainite (B), martensite (M), and retained-austenite (R-A) was measured using FE-SEM, an image analyzer, and an X-ray diffractor (XRD), and the occupancy ratio of the fine martensite was calculated. The number of martensite grains for calculating the occupancy ratio of the fine martensite was counted by the point count method.

[Table 1]

| Steel type | Alloy composition (wt%) | | | | | | | | | | | Relational Expression 1 |
|---|---|---|---|---|---|---|---|---|---|---|---|---|
| | C | Si | Mn | P | S | Sol.Al | Cr | Nb | Ti | N | Sb | |
| Inventive Steel 1 | 0.12 | 0.6 | 1.8 | 0.011 | 0.003 | 0.1 | 0 | 0 | 0 | 0.004 | 0.02 | 0.46 |
| Inventive Steel 2 | 0.11 | 0.4 | 1.9 | 0.013 | 0.004 | 0.3 | 0 | 0 | 0 | 0.007 | 0.03 | 0.43 |
| Inventive Steel 3 | 0.13 | 0.7 | 1.9 | 0.012 | 0.002 | 0.01 | 0 | 0 | 0 | 0.005 | 0.03 | 0.44 |
| Inventive Steel 4 | 0.14 | 0.5 | 1.55 | 0.011 | 0.008 | 0.2 | 0.2 | 0 | 0 | 0.003 | 0.02 | 0.48 |
| Comparative Steel 1 | 0.12 | 0.5 | 1.8 | 0.016 | 0.005 | 0.02 | 0 | 0 | 0 | 0.004 | 0.02 | 0.36 |
| Comparative Steel 2 | 0.12 | 0.2 | 1.9 | 0.015 | 0.004 | 0.5 | 0 | 0.02 | 0.01 | 0.005 | 0.02 | 0.37 |
| Comparative Steel 3 | 0.14 | 0.7 | 1.7 | 0.012 | 0.002 | 0.02 | 0.1 | 0.03 | 0 | 0.007 | 0.02 | 0.41 |
| Comparative Steel 4 | 0.12 | 0.7 | 1.6 | 0.014 | 0.007 | 0.02 | 0.2 | 0.02 | 0.015 | 0.003 | 0.02 | 0.39 |

[Table 2]

| Steel type | Finish | Coiling | Annealing | First cooling | Second cooling | | Final cooling | Classificati | | | | on |
|---|---|---|---|---|---|---|---|---|---|---|---|---|
| | rolling temperature (°C) | temperature (°C) | temperature (°C) | Pate (°C/s ) | Temperature (°C) | Pate (°C/s ) | Temperature (°C) | Relation al Expressi on 3 | Pate (°C/ s ) | Temperature (°C) | | on |
| Inventive Steel 1 | 890 | 560 | 830 | 3 | 650 | 17 | 360 | 101 | 5 | 25 | | Inventive Example 1 |
| Inventive Steel 2 | 900 | 550 | 830 | 4 | 670 | 18 | 420 | 45 | 6 | 27 | | Inventive Example 2 |
| | 890 | 570 | 820 | 3 | 660 | 17 | 400 | 64 | 8 | 25 | | Inventive Example 3 |
| | 880 | 550 | 810 | 5 | 655 | 18 | 410 | 55 | 6 | 30 | | Inventive Example 4 |
| | 880 | 580 | 830 | 3 | 670 | 16 | 360 | 103 | 5 | 25 | | Inventive Example 5 |
| | 890 | 560 | 810 | 4 | 665 | 16 | 360 | 103 | 5 | 26 | | Inventive Example 6 |
| Inventive Steel 3 | 890 | 550 | 820 | 4 | 650 | 17 | 440 | 17 | 6 | 25 | | Inventive Example 7 |
| | 900 | 560 | 830 | 5 | 650 | 18 | 400 | 55 | 8 | 27 | | Inventive Example 8 |
| | 900 | 570 | 830 | 5 | 670 | 18 | 360 | 94 | 7 | 27 | | Inventive Example 9 |
| | 880 | 560 | 800 | 3 | 660 | 15 | 360 | 94 | 7 | 25 | | Inventive Example 10 |
| Inventive Steel 4 | 890 | 560 | 830 | 3 | 670 | 17 | 400 | 58 | 8 | 28 | | Inventive Example 11 |

(continued)

| | rolling temperature (°C) | temperature (°C) | temperature (°C) | Pate (°C/s) | Temperature (°C) | Pate (°C/s) | Temperature (°C) | Relational Expression 3 | Pate (°C/s) | Temperature (°C) | on |
|---|---|---|---|---|---|---|---|---|---|---|---|
| Comparative Steel 1 | 890 | 560 | 830 | 3 | 670 | 17 | 560 | -90 | 6 | 30 | Comparative Example 1 |
| | 870 | 550 | 800 | 4 | 660 | 16 | 500 | -32 | 8 | 30 | Comparative Example 2 |
| | 870 | 550 | 800 | 4 | 665 | 17 | 490 | -22 | 5 | 25 | Comparative Example 3 |
| Comparative Steel 2 | 880 | 550 | 800 | 5 | 660 | 18 | 480 | -18 | 6 | 27 | Comparative Example 4 |
| | 890 | 560 | 830 | 4 | 650 | 17 | 480 | -18 | 5 | 25 | Comparative Example 5 |
| Comparative Steel 3 | 870 | 540 | 770 | 3 | 655 | 16 | 480 | -23 | 6 | 27 | Comparative Example 6 |
| | 880 | 550 | 800 | 4 | 670 | 17 | 480 | -23 | 7 | 25 | Comparative Example 7 |
| Comparative Steel 4 | 890 | 560 | 830 | 5 | 670 | 17 | 500 | -32 | 8 | 30 | Comparative Example 8 |
| | 880 | 540 | 770 | 4 | 660 | 17 | 530 | -61 | 8 | 25 | Comparative Example 9 |

14

[Table 3]

| Classification | Microstructure | | | | | Mechanical properties | | | | |
|---|---|---|---|---|---|---|---|---|---|---|
| | F (%) | B (%) | M (%) | R-A (%) | Occupancy ratio of fine M (%) | TS (MPa) | UE (%) | TE (%) | Nu | Relational Expression 2 |
| Inventive Example 1 | 69 | 21 | 8 | 2 | 80 | 591 | 19.1 | 30.8 | 0.190 | 2145 |
| Inventive Example 2 | 74 | 16 | 8 | 2 | 76 | 597 | 18.2 | 28.2 | 0.188 | 2043 |
| Inventive Example 3 | 73 | 17 | 7 | 3 | 77 | 599 | 18.3 | 29.1 | 0.189 | 2072 |
| Inventive Example 4 | 67 | 24 | 7 | 2 | 82 | 598 | 18.7 | 29.2 | 0.192 | 2147 |
| Inventive Example 5 | 71 | 18 | 7 | 4 | 83 | 604 | 18.7 | 30.7 | 0.191 | 2157 |
| Inventive Example 6 | 71 | 16 | 10 | 3 | 87 | 602 | 18.8 | 29.3 | 0.194 | 2196 |
| Inventive Example 7 | 70 | 20 | 8 | 2 | 72 | 628 | 17.1 | 28.1 | 0.185 | 1987 |
| Inventive Example 8 | 72 | 18 | 7 | 3 | 75 | 637 | 17.2 | 28.2 | 0.185 | 2027 |
| Inventive Example 9 | 70 | 18 | 8 | 4 | 79 | 641 | 17.8 | 28.4 | 0.187 | 2134 |
| Inventive Example 10 | 75 | 8 | 13 | 4 | 88 | 639 | 18.1 | 29.6 | 0.191 | 2209 |
| Inventive Example 11 | 74 | 14 | 8 | 4 | 90 | 632 | 19.3 | 28.6 | 0.187 | 2281 |
| Comparative Example 1 | 81 | 4 | 15 | 0 | 38 | 589 | 15.5 | 25.9 | 0.164 | 1497 |
| Comparative Example 2 | 81 | 4 | 15 | 0 | 43 | 593 | 16.0 | 26.7 | 0.168 | 1594 |
| Comparative Example 3 | 82 | 3 | 15 | 0 | 46 | 601 | 16.4 | 26.9 | 0.171 | 1685 |
| Comparative Example 4 | 83 | 3 | 14 | 0 | 53 | 594 | 16.4 | 28.5 | 0.176 | 1715 |
| Comparative Example 5 | 81 | 4 | 15 | 0 | 58 | 596 | 16.6 | 28.7 | 0.178 | 1761 |
| Comparative Example 6 | 79 | 6 | 15 | 0 | 50 | 656 | 14.6 | 21.0 | 0.179 | 1714 |
| Comparative Example 7 | 75 | 7 | 18 | 0 | 61 | 671 | 15.8 | 24.6 | 0.172 | 1824 |
| Comparative Example 8 | 80 | 6 | 14 | 0 | 33 | 657 | 13.6 | 22.5 | 0.167 | 1492 |
| Comparative Example 9 | 83 | 5 | 12 | 0 | 41 | 676 | 14.1 | 22.2 | 0.164 | 1563 |

(In Table 3, Occupancy ratio of fine M is expressed by calculating a ratio (M*/Mt) of the number of martensite grains having an average particle size of 3 $\mu$m or less and an aspect ratio (long diameter/short diameter) of less than 4 (M*) to the number of all martensite grains (Mt).)

(In Table 3, TS denotes a tensile strength, UE denotes a uniform elongation, TE denotes a total elongation, Nu denotes a strain hardening index, and the unit of Relational Expression 2 is MPa%.)

As shown in Tables 1 to 3, in the case of Inventive Examples 1 to 11 in which the steel alloy composition system and the production conditions satisfy all the suggestions of the present disclosure, the intended microstructure is formed, such that the tensile strength is 490 MPa or more, which is high strength, and the relationship between the tensile strength, the uniform elongation, and the strain hardening index (corresponding to Relational Expression 2) of 1,900 or more is secured. Therefore, the desired workability may be secured.

On the other hand, in the case of Comparative Examples 1 to 9 in which one or more conditions of the steel alloy composition system and the production conditions do not satisfy the suggestions of the present disclosure, it can be confirmed that the intended microstructure is not formed, such that the relationship between the tensile strength, the uniform elongation, and the strain hardening index (corresponding to Relational Expression 2) of less than 1,900 is secured, and thus, the workability is not secured.

FIG. 1 illustrates a graph showing changes in relationship between the tensile strength, the uniform elongation, and the strain hardening index (corresponding to Relational Expression 2) according to the composition ratio of C, Si, Al, Mn, Cr, Nb, and Ti (corresponding to Relational Expression 1) of each of Inventive Steel and Comparative Steel.

As illustrated in FIG. 1, it can be appreciated that when the composition ratio of C, Si, Al, Mn, Cr, Nb, and Ti satisfies 0.42 or more, the value of Relational Expression 2 of 1,900 or more may be secured.

**Claims**

1.  A steel sheet having excellent uniform elongation and strain hardening rate comprising, by wt%, 0.08 to 0.15% of carbon (C), 1.2% or less (excluding 0%) of silicon (Si), 1.4 to 2.4% of manganese (Mn), 1.0% or less of chromium (Cr), 0.1% or less (excluding 0%) of phosphorus (P), 0.01% or less (excluding 0%) of sulfur (S), 1.0% or less (excluding 0%) of aluminum (sol.Al), 0.01% or less (excluding 0%) of nitrogen (N), 0.05% or less (excluding 0%) of antimony (Sb), and a balance of Fe and unavoidable impurities,

    wherein the steel sheet satisfies the following Relational Expression 1, and
    the steel sheet includes, as a microstructure, ferrite having an area fraction of 60% or more and a balance of bainite, martensite, and retained-austenite,

    ```
    [Relational Expression 1]
    ```

    $$(C + Si + Al)/(Mn + Cr + (10 \times Nb) + (10 \times Ti)) \geq 0.42$$

    (in Relational Expression 1, each element indicates a weight content).

2.  The steel sheet having excellent uniform elongation and strain hardening rate of claim 1, wherein the steel sheet contains the martensite phase in an area fraction of 5 to 20%.

3.  The steel sheet having excellent uniform elongation and strain hardening rate of claim 1, wherein, in the steel sheet, the number of martensite grains having an average grain size of 3 $\mu$m or less and an aspect ratio (long diameter/short diameter) of less than 4 is 70% or more of a total number of all martensite grains.

4.  The steel sheet having excellent uniform elongation and strain hardening rate of claim 1, wherein the steel sheet contains the bainite phase in an area fraction of 8 to 30%.

5.  The steel sheet having excellent uniform elongation and strain hardening rate of claim 1, wherein the steel sheet includes a zinc-based plating layer formed on at least one surface thereof.

6.  The steel sheet having excellent uniform elongation and strain hardening rate of claim 1, wherein the steel sheet has a tensile strength of 490 MPa or more, and

    a relationship between a strain hardening index (Nu) measured in a strain section of 10 to a uniform elongation (%), a tensile strength (TS), and a uniform elongation (UE) satisfies the following Relational Expression 2,

$$[\text{Relational Expression 2}]$$

$$(\text{TS} \times \text{UE} \times \text{Nu}) \geq 1{,}900$$

(where a unit is MPa%).

7. A method for producing a steel sheet having excellent uniform elongation and strain hardening rate, the method comprising:

preparing a steel slab that contains, by wt%, 0.08 to 0.15% of carbon (C), 1.2% or less (excluding 0%) of silicon (Si), 1.4 to 2.4% of manganese (Mn), 1.0% or less of chromium (Cr), 0.1% or less (excluding 0%) of phosphorus (P), 0.01% or less (excluding 0%) of sulfur (S), 1.0% or less (excluding 0%) of aluminum (sol.Al), 0.01% or less (excluding 0%) of nitrogen (N), 0.05% or less (excluding 0%) of antimony (Sb), and a balance of Fe and unavoidable impurities, and satisfies the following Relational Expression 1;
heating the steel slab in a temperature range of 1,100 to 1,300°C;
subjecting the heated steel slab to finish hot rolling at an Ar3 transformation point or higher to produce a hot-rolled steel sheet;
coiling the hot-rolled steel sheet in a temperature range of 400 to 700°C;
performing cooling to room temperature at a cooling rate of 0.1°C/s or less after the coiling;
performing cold rolling at a cold reduction ratio of 40 to 70% after the cooling to produce a cold-rolled steel sheet;
continuously annealing the cold-rolled steel sheet in a temperature range of Ac1 + 30°C to Ac3 - 20°C;
performing stepwise cooling after the continuous annealing; and
maintaining the steel sheet for 30 seconds or longer after the stepwise cooling,
wherein the stepwise cooling includes a first cooling performed to 630 to 670°C at a cooling rate of 10°C/s or less (excluding 0°C/s), and a second cooling performed to a temperature range satisfying the following Relational Expression 3 at a cooling rate of 5°C/s or more in a hydrogen cooling facility after the first cooling,

$$[\text{Relational Expression 1}]$$

$$(\text{C} + \text{Si} + \text{Al})/(\text{Mn} + \text{Cr} + (10 \times \text{Nb}) + (10 \times \text{Ti})) \geq 0.42$$

(in Relational Expression 1, each element indicates a weight content),

$$[\text{Relational Expression 3}]$$

$$560 - (440 \times \text{C}) - (14 \times (\text{Si} + \text{Al})) - (26 \times \text{Mn}) - (11 \times \text{Cr}) - (0.97 \times \text{RCS}) > 0$$

(in Relational Expression 3, each element indicates a weight content, and RCS indicates a second cooling end temperature (°C)).

8. The method for producing a steel sheet having excellent uniform elongation and strain hardening rate of claim 7, wherein an outlet temperature during the finish hot rolling satisfies Ar3 to Ar3 + 50°C.

9. The method for producing a steel sheet having excellent uniform elongation and strain hardening rate of claim 7, further comprising:

performing hot-dip galvanizing after the maintaining; and
performing final cooling to Ms - 100°C or lower at an average cooling rate of 3°C/s or more after the hot-dip galvanizing.

10. The method for producing a steel sheet having excellent uniform elongation and strain hardening rate of claim 9, further comprising performing temper rolling at a reduction ratio of less than 1% after the final cooling.

FIG. 1

## INTERNATIONAL SEARCH REPORT

| International application No. |
| --- |
| **PCT/KR2020/007845** |

### A. CLASSIFICATION OF SUBJECT MATTER

**C22C 38/38**(2006.01)i; **C21D 9/46**(2006.01)i; **C21D 8/02**(2006.01)i

According to International Patent Classification (IPC) or to both national classification and IPC

### B. FIELDS SEARCHED

Minimum documentation searched (classification system followed by classification symbols)

C22C 38/38; C21D 8/02; C21D 8/04; C22C 38/00; C22C 38/04; C22C 38/06; C22C 38/60; C23C 2/06; C21D 9/46

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 강판(steel), 페라이트(ferrite), 베이나이트(bainite), 마르텐사이트(martensite), 오스테나이트(austenite), 압연(rolling)

### C. DOCUMENTS CONSIDERED TO BE RELEVANT

| Category* | Citation of document, with indication, where appropriate, of the relevant passages | Relevant to claim No. |
| --- | --- | --- |
| X | KR 10-2013-0086062 A (JFE STEEL CORPORATION) 30 July 2013. See paragraphs [0091]-[0096] and [0109]-[0130], claims 1 and 3 and table 3. | 1-10 |
| A | KR 10-2020411 B1 (POSCO) 10 September 2019. See claims 5, 7 and 11. | 1-10 |
| A | KR 10-2018-0095668 A (JFE STEEL CORPORATION) 27 August 2018. See claims 1, 2, 5, 6, 8 and 10. | 1-10 |
| A | KR 10-1630976 B1 (POSCO) 16 June 2016. See paragraph [0087] and claims 1, 3 and 8. | 1-10 |
| A | JP 2007-321233 A (NIPPON STEEL CORP.) 13 December 2007. See claims 1-4. | 1-10 |

| ☐ Further documents are listed in the continuation of Box C. | ☑ See patent family annex. |
| --- | --- |

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **01 December 2020** | **01 December 2020** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2020/007845**

| Patent document cited in search report | | | Publication date (day/month/year) | Patent family member(s) | | | Publication date (day/month/year) |
|---|---|---|---|---|---|---|---|
| KR | 10-2013-0086062 | A | 30 July 2013 | CN | 103210105 | A | 17 July 2013 |
| | | | | CN | 103210105 | B | 12 August 2015 |
| | | | | EP | 2634281 | A1 | 04 September 2013 |
| | | | | JP | 2012-117148 | A | 21 June 2012 |
| | | | | JP | 5141811 | B2 | 13 February 2013 |
| | | | | TW | 201226581 | A | 01 July 2012 |
| | | | | TW | I441928 | B | 21 June 2014 |
| | | | | US | 2013-0295410 | A1 | 07 November 2013 |
| | | | | US | 9028973 | B2 | 12 May 2015 |
| | | | | WO | 2012-063969 | A1 | 18 May 2012 |
| KR | 10-2020411 | B1 | 10 September 2019 | CN | 111448332 | A | 24 July 2020 |
| | | | | EP | 3730636 | A1 | 28 October 2020 |
| | | | | WO | 2019-124693 | A1 | 27 June 2019 |
| KR | 10-2018-0095668 | A | 27 August 2018 | CN | 108474074 | A | 31 August 2018 |
| | | | | EP | 3406748 | A1 | 28 November 2018 |
| | | | | EP | 3406748 | B1 | 14 October 2020 |
| | | | | JP | 6237962 | B1 | 29 November 2017 |
| | | | | MX | 2018008975 | A | 03 September 2018 |
| | | | | US | 2019-0032186 | A1 | 31 January 2019 |
| | | | | WO | 2017-126678 | A1 | 27 July 2017 |
| KR | 10-1630976 | B1 | 16 June 2016 | CN | 107002207 | A | 01 August 2017 |
| | | | | CN | 107002207 | B | 29 March 2019 |
| | | | | EP | 3231887 | A1 | 18 October 2017 |
| | | | | EP | 3231887 | B1 | 11 March 2020 |
| | | | | JP | 2018-502989 | A | 01 February 2018 |
| | | | | JP | 6546280 | B2 | 17 July 2019 |
| | | | | US | 10344361 | B2 | 09 July 2019 |
| | | | | US | 2017-0369974 | A1 | 28 December 2017 |
| | | | | WO | 2016-093598 | A1 | 16 June 2016 |
| | | | | WO | 2016-093598 | A8 | 18 August 2016 |
| JP | 2007-321233 | A | 13 December 2007 | JP | 4676923 | B2 | 27 April 2011 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005264176 A
- KR 20150073844
- JP 2010090432 A